# EUROPEAN PATENT SPECIFICATION

(11) **EP 4 496 074 B1**
(45) Date of publication and mention of the grant of the patent: **06.05.2026**
(21) Application number: 23770701.3
(22) Date of filing: 13.03.2023
(51) Int. Cl.: H01M 10/613, H01M 10/643, H01M 10/658, H01M 50/202, H01M 50/209, H01M 50/213, H01M 50/224, H01M 50/231, H01M 50/238, H01M 50/342, H01M 50/367

(54) **BATTERY PACK**
BATTERIEPACK
BLOC-BATTERIE

(30) Priority: 14.03.2022 JP 2022039347
(43) Date of publication of application: 22.01.2025
(73) Proprietor: PANASONIC INTELLECTUAL PROPERTY MANAGEMENT CO., LTD., Kadoma-shi, Osaka 571-0057 (JP)
(72) Inventor: SHIMIZU, Keisuke, Kadoma-shi, Osaka 571-0057 (JP)
(74) Representative: Novagraaf International SA
(86) International application number: PCT/JP2023/009494
(87) International publication number: WO 2023/176746

(56) References cited:
- EP-A1- 4 318 770
- WO-A1-2012/133710
- WO-A1-2019/065169
- JP-A- 2012 119 138
- JP-A- 2012 119 138
- JP-A- 2017 224 627
- JP-A1- WO2019 065 169
- US-A1- 2013 095 356

## Description

### Technical Field

The present disclosure relates to a battery pack.

### Background Art

A nonaqueous electrolyte secondary battery such as a lithium-ion battery is used in the form of a battery pack in which a plurality of cells (batteries) is electrically connected and housed in a case. If there is an abnormality in the cells in the battery pack and one cell is abnormal and undergoes thermal runaway, a chain of thermal runaways may occur successively when a high-temperature gas is discharged from the cell and brought into contact with the surrounding cells. In a battery pack in which gas exhaust valves face each other, since the space between the facing cells is narrow, the battery pack is susceptible to thermal runaway cells. This problem is particularly remarkable in ultra-narrow battery packs with increased energy density.

In order to prevent a chain reaction of thermal runaways caused by high-temperature gas, it is necessary to prevent contact with high-temperature gas generated from abnormal cells. Patent Literature 1 describes a power supply device (battery pack) in which a heat-resistant sheet is arranged in the center between gas exhaust valves of cells arranged to face each other, and exhaust chambers (gas exhaust paths) are provided on both sides of the heat-resistant sheet.

### Citation List

### Patent Literature

PTL 1: PCT International Publication No. WO2019/065169

### SUMMARY OF THE INVENTION

In the structure of the battery pack of Patent Literature 1, a gas exhaust path is formed between gas exhaust valves of both cells facing each other and a heat-resistant sheet. Therefore, it is necessary to provide a sufficient distance between the gas exhaust valves of the cells facing each other, resulting in increasing the size of the battery pack and decreasing energy density. The disclosure of document EP 4 318 770 A1 is also relevant to understanding the invention.

An object of the present disclosure is to provide a battery pack that can be miniaturized and can suppress a chain reaction of thermal runaways to the cells facing each other, even when a cell undergoes a thermal runaway.

A battery pack according to the present invention is defined by the appended claims.

A battery pack according to the present disclosure can be miniaturized, and can suppress a chain reaction of thermal runaways to another cell which the one cell faces even if one cell undergoes thermal runaway.

### [Brief Description of Drawings]

FIG. 1 is an external view of a battery pack according to the present disclosure.
FIG. 2 is an external view of a battery block according to the present disclosure.
FIG. 3 is an exploded view of the battery block of FIG. 2.
FIG. 4 is a sectional view illustrating a gas exhaust structure of the battery pack that does not fall within the scope of the present invention.
FIG. 5 is a view illustrating a mechanism in which a gas exhaust path of the battery pack of FIG. 4 is widened.
FIG. 6 is an example of a structure of a heat-resistant member of the present disclosure.
FIG. 7 is a sectional view illustrating a second gas exhaust structure of the battery pack according to the present invention.
FIG. 8 is a sectional view illustrating a third gas exhaust structure of the battery pack that does not fall within the scope of the present invention.
FIG. 9 is a sectional view illustrating a fourth gas exhaust structure of the battery pack that does not fall within the scope of the present invention.

### [Description of Embodiments]

Hereinafter, the exemplary embodiment of the present disclosure is described with reference to drawings. The shapes, materials, directions, and numerical values described below are examples, and can be appropriately modified according to applications of use, purposes, and specifications. Furthermore, component elements of the exemplary embodiments, modifications, and the like, mentioned below are expected to be selectively combined from the beginning.

### <First exemplary embodiment>

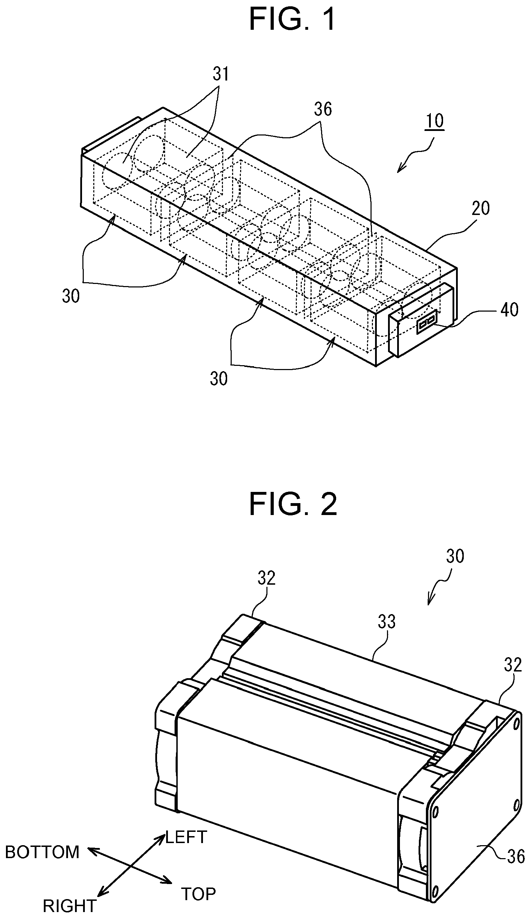

FIG. 1 is an external view of battery pack 10 according to the present disclosure. Battery pack 10 includes outer covering case 20 made of metal such as aluminum, and a plurality of battery blocks 30 housed inside outer covering case 20, and heat-resistant member 36 arranged between the plurality of battery blocks 30. Note here that outer covering case 20 is not limited to be made of metal and may be made of resin.

Battery block 30 includes a plurality of cells 31 arranged in line, and the plurality of cells 31 is electrically connected to each other. In battery block 30, a plurality of cells 31 is, for example, electrically connected in parallel. Battery pack 10 includes a plurality of battery blocks 30 electrically connected in series or in parallel to output a voltage suitable for respective devices to be used. Cell 31 is, for example, a cylindrical battery. Note here that in this disclosure, a cylindrical battery is described as an example of cell 31, but a battery is not limited to a cylindrical battery, and may be a prismatic battery or the like. Furthermore, in this disclosure, as described later, battery block 30 includes a plurality of battery cells 31 each including gas exhaust valve 31c and holder 32. Holder 32 includes gas exhaust surface 30a in which gas exhaust valves 31c of the plurality of cells 31 are aligned on an end surface of holder 32.

Battery pack 10 includes a terminal plate (current collector plate) to which the plurality of battery blocks 30 is electrically connected. A positive electrode terminal and a negative electrode terminal of battery block 30 are respectively connected to the terminal plate. The terminal plate may be integrated with holder 32 described later.

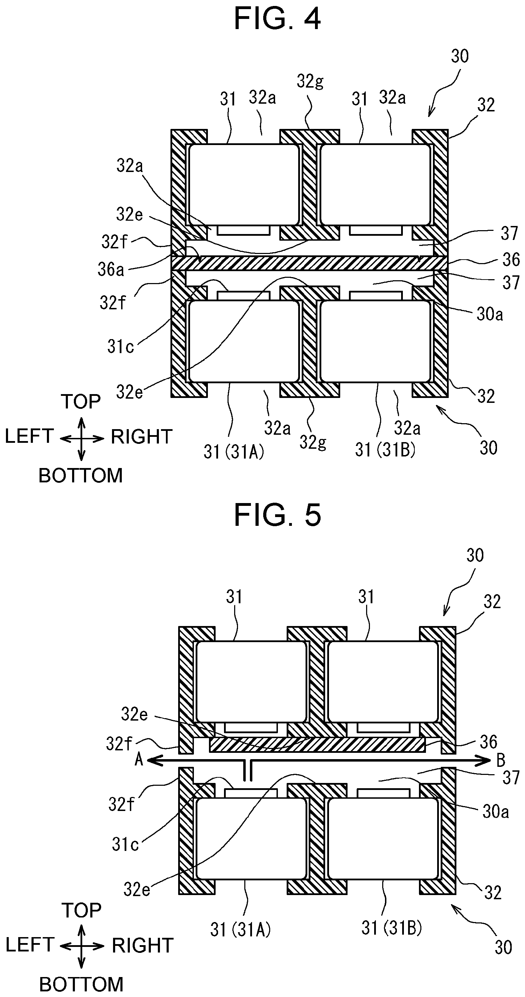

Cell 31 is a cylindrical battery including a bottomed cylindrical outer covering can and a sealing body that closes an opening part of the outer covering can. Furthermore, an insulating gasket is provided between the outer covering can and the sealing body. In a cylindrical battery, in general, the sealing body serves as a positive electrode terminal, and the outer covering can serves as a negative electrode terminal. As described later, the sealing body includes gas exhaust valve 31c (see FIG. 4), on cell end surface 31a, for exhausting gas when an abnormality occurs in cell 31 and the internal pressure rises. Note here that gas exhaust valve 31c may be provided on the bottom of the outer covering can.

External terminal 40 electrically connected to battery block 30 is provided on the end part of exterior case 20. External terminal 40 is used as a terminal for applying a DC voltage to a device into which battery pack 10 is to be installed. Furthermore, external terminal 40 is used also in charging battery pack 10 (cells 31). External terminal 40 may be provided at only one end part of battery pack 10, or may be provided in a plurality of places.

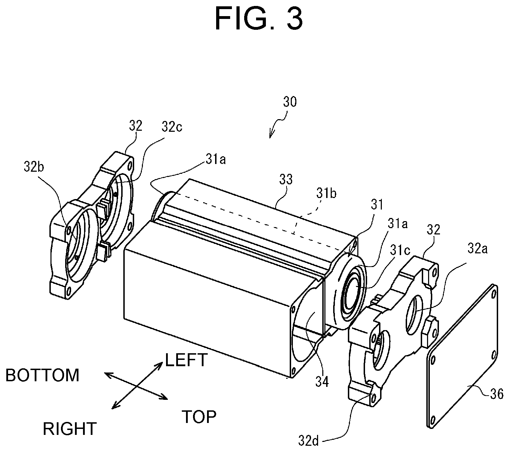

Next, a structure of battery block 30 is described with reference to FIGs. 2 and 3. FIG. 2 is an external view of battery block 30, and FIG. 3 is an exploded view of battery block 30. For convenience of description, as shown in FIGs. 2 and 3, the description will be made assuming that the longitudinal direction of battery block 30 is the vertical direction, and the lateral direction in which cells 31 are aligned is the horizontal direction.

Battery block 30 is in a columnar shape composed of upper and lower holders 32 and side members 33. The shape of battery block 30 can be various shapes, such as a polygonal prismatic shape or a circular columnar shape, depending on arrangement of the plurality of cells 31 to be housed and the intended use of battery pack 10.

A plurality of battery cells 31 of battery block 30 is arranged, for example, in parallel. As shown in FIG. 3, battery block 30 includes heat insulating member 34 arranged between adjacent cells 31 of side surface member 33. Heat insulating member 34 acts as a heat insulating material to block heat from cell side surface 31b and prevent heat from being transferred to adjacent cell 31.

Side surface member 33 covers the entire part of a plurality of cells 31 in battery block 30 except for cell end surfaces 31a, and holds cells 31. Side surface member 33 is formed of, for example, a highly thermally conductive material including a thermosetting resin, a thermally conductive filler, and/or an endothermic filler. Side surface member 33 is configured to be in contact with cell side surface 31b and to transfer heat to side surface member 33 when abnormal heat generation occurs in cell 31. Note here that, as the resin constituting side surface member 33, thermosetting unsaturated polyester, epoxy resin, melamine resin, and phenol resin, thermoplastic polycarbonate, polyethylene, polypropylene, polyvinyl chloride, polystyrene, and the like, are used. Furthermore, as the thermally conductive filler, a metal oxide (for example, aluminum oxide, and zinc oxide), a metal nitride (for example, aluminum nitride, and boron nitride), or a metal oxynitride (for example, aluminum oxynitride) is used. Furthermore, the endothermic filler exhibits an endothermic action during thermal decomposition, and, for example, aluminum hydroxide, magnesium hydroxide, and sodium hydrogen carbonate are used. The endothermic filler shows an effect of reducing heat generation when abnormal heat generation occurs in cell 31.

Heat insulating member 34 is arranged between two adjacent cells 31 along the axial direction of cells 31. Heat insulating member 34 is made of, for example, heat insulating resin, foamed resin, foamed concrete, gypsum board, glass wool, or silica aerogel heat insulating materials. Heat insulating member 34 is formed in a flat plate shape in FIG. 3, but it may have a curved surface depending on the shape of the side surface of cell 31.

A length along the longitudinal direction (axial direction) of cells 31 in side surface member 33 and heat insulating member 34 is formed to be smaller than a length in the axial direction of cell 31. Therefore, as shown in FIG. 3, cell end surfaces 31a on both sides of cell 31 in the axial direction protrude from side surface member 33.

Holder 32 includes first and second holder members that respectively face both end surfaces of the plurality of cells 31 in the longitudinal direction, and is made of, for example, thermosetting resin. Holder 32 is a member for holding cell end surfaces 31a that protrude upward and downward from side surface member 33 from both sides in the longitudinal directions of plurality of cells 31, and plays the role of maintaining the shape of battery block 30 together with side surface member 33. Holder 32 further includes opening part 32a at a position corresponding to cell end surface 31a on the end surface of holder 32, and is also used for connecting an external electrode terminal to cell end surface 31a forming a positive electrode terminal or a negative electrode terminal. Opening part 32a also serves as a gas exhaust path when cell 31 is abnormal.

As shown in FIG. 3, holder 32 includes housing part 32b with a shape corresponding to cell end surface 31a. Housing part 32b includes bottom surface part 32c that is a surface facing cell end surface 31a, and a side surface part along cell side surface 31b from bottom surface part 32c.

Two battery blocks 30 are bonded such that gas exhaust valves 31c of cells 31 of each battery block 30 are arranged opposite to each other. Columnar parts 32d provided on the first holder member near the top surface of holder 32 are butted against each other, and housed integrally with exterior case 20 of battery pack 10. Sheet-like heat-resistant member 36 is arranged in a space formed by butting columnar parts 32d against each other. Heat-resistant member 36 is provided so that gas discharged from cell end surface 31a of abnormally heated cell 31 does not hit the other directly facing cell end surface 31a, and serves to release the gas in the left-right direction (a direction perpendicular to the axial direction).

Next, the structure of battery block 30 that does not fall within the scope of the present invention is further described with reference to FIG. 4. FIG. 4 is a sectional view of two battery blocks 30, and the two battery blocks 30 are arranged such that gas exhaust valves 31c of cells 31 face each other. Hereinafter, for convenience of description, the direction in which the plurality of battery blocks 30 is aligned is the vertical direction, the direction in which cells 31 are aligned inside battery block 30 is the left-right direction, the back side perpendicular to the page is the depth direction, and the reverse side is the forward direction. In battery pack 10 of this exemplary embodiment, a plurality of battery blocks 30 shown in FIG. 4 may be arranged in the vertical direction and the left-right direction, or in the depth direction.

Note here that the number of cells 31 in battery block 30 is not limited to two, and may be three or more. Regarding the arrangement of the plurality of cells 31, it is preferable to arrange cells 31 so that the sectional area of battery block 30 becomes small, but they may be arranged in a straight line.

As shown in FIG. 4, left and right side surfaces 32f of holder 32 protrude more than holder end surface 32e. In this exemplary embodiment, one battery block 30 and another battery block 30 are butted against each other with heat-resistant member 36 sandwiched therebetween and are housed integrally in outer covering case 20 of battery pack 10. Heat-resistant member 36 is provided as a blocking wall to prevent gas exhausted from gas exhaust valve 31c due to thermal runaway of a first cell 31 from directly hitting gas exhaust valve 31c of a second cell 31 facing the first cell 31. A space between each holder end surface 32e provided with gas exhaust valve 31c of cell 31 and heat-resistant member 36, gas exhaust path 37 is formed. However, as described later, in gas exhaust path 37 in a state shown in FIG. 4, since a distance between holder end surface 32e and heat-resistant member 36 is short, a sufficient size for exhausting gas is not secured.

Next, with reference to FIGs. 4 and 5, a gas exhaust structure of battery pack 10 of the first exemplary embodiment is described. FIG. 4 shows a sectional view of a plurality of battery blocks 30 in which gas exhaust valves 31c of cells 31 are arranged to face each other. FIG. 5 is a view for illustrating a mechanism in which gas exhaust path 37 widens when cell 31 that undergoes thermal runaway (hereinafter, also referred to as an abnormal cell) exhausts gas in battery pack 10 of FIG. 4.

The gas exhaust structure of battery pack 10 of the present disclosure includes battery blocks 30 arranged facing each other, heat-resistant member 36 arranged between battery blocks 30, and gas exhaust path 37 between battery blocks 30 and heat-resistant member 36.

The plurality of battery blocks 30 includes gas exhaust surfaces 30a formed by aligning gas exhaust valves 31c of the plurality of cells 31 with respect to holder end surface 32e. The plurality of battery blocks 30 is arranged so that gas exhaust surfaces 30a face each other with heat-resistant member 36 sandwiched between gas exhaust surfaces 30a.

Heat-resistant member 36 is arranged between gas exhaust surfaces 30a facing each other. Heat-resistant member 36 is sandwiched and fixed between side surfaces 32f of holder 32 at both ends in the left-right direction. Gas exhaust path 37 is formed between each surface in the vertical direction of heat-resistant member 36 and facing gas exhaust surfaces 30a.

FIG. 4 shows arrangement of battery block 30 and heat-resistant member 36 in a normal state in which no abnormality occurs in cells 31 and no high-temperature gas is exhausted. In battery pack 10 of the present disclosure, in response to demands for reduction in size and high energy density, the interval between holder end surfaces 32e facing each other of the plurality of battery blocks 30 is formed small. Therefore, in the normal state, the distance between holder end surface 32e and gas exhaust path 37 is short, and a sufficient size for gas exhaust is not secured.

Heat-resistant member 36 of this exemplary embodiment includes deformable part 36a deformed in response to gas exhausted from abnormal cell 31. Deformable part 36a of heat-resistant member 36 of this exemplary embodiment shown in FIG. 4 is configured by a notch formed near side surface 32f of holder 32 at both left and right sides. Deformable part 36a is formed so as to break in response to a pressure of gas exhausted from abnormal cell 31. When deformable part 36a breaks, heat-resistant member 36 can be displaced so as to widen gas exhaust path 37 between holder end surfaces 32e facing each other. Note here that the configuration of deformable part 36a is not limited to a notch. Deformable part 36a can be formed by reducing a thickness of heat-resistant member 36.

Furthermore, deformable part 36a in the present disclosure is not necessarily broken and separated from other sites, but also configured by a melting part that melts in response to a high-temperature gas exhausted from abnormal cell 31, and it may be configured that the melting part melts, and is separated from other sites. Alternatively, as described later, the shape may be deformed so as to widen gas exhaust path 37 in response to a pressure of gas.

Next, an operation of widening gas exhaust path 37 is described in more detail. In FIG. 5, a case in which the lower left cell is referred to as cell 31A, and the lower right cell is referred to as cell 31B, and cell 31A undergoes thermal runaway and exhausts gas is described.

Abnormal cell 31A exhausts high-temperature and high-pressure gas upward from gas exhaust valve 31c. Deformable part 36a of heat-resistant member 36 breaks in response to a pressure of exhausted gas is received. Heat-resistant member 36 is separated at deformable part 36a, becomes movable between holder end surfaces 32e, and is pushed upward in response to the exhaust gas from abnormal cell 31A. Thus, gas exhaust path 37 above gas exhaust valve 31c of abnormal cell 31A and gas exhaust valve 31c of adjacent cell 31B is widened.

The gas exhausted from abnormal cell 31A hits heat-resistant member 36 at the upper side and flows in the left-right direction in FIG. 5, and pushes out pieces of heat-resistant member 36 sandwiched between side surfaces 32f of holder 32, and the gas is exhausted to the outside in the paths shown by arrows A and B. The gas exhausted from abnormal cell 31A is vigorously exhausted to the outside via the path indicated by the arrow B, and gas exhaust valve 31c of adjacent cell 31B undergoes little thermal influence. Furthermore, heat-resistant member 36 prevents cell 31 arranged facing the upper side of abnormal cell 31A from directly receiving the high-temperature gas. Thus, even when a first cell 31 of battery block 30 becomes abnormal and exhausts a high-temperature gas, a second cell 31 that faces the first cell 31 does not affected by the high-temperature gas and can suppress a chain reaction of thermal runaways.

As described above, in battery pack 10 of this exemplary embodiment, since a distance between holder end surfaces 32e facing each other is made small, the size of battery pack 10 can be reduced. Heat-resistant member 36 is arranged between holder end surfaces 32e facing each other. In a normal state, the size of formed gas exhaust path 37 is not secured to be sufficient, but heat-resistant member 36 is configured to be displaced to widen gas exhaust path 37 by pressure of gas exhausted from abnormal cell 31A. As a result, when abnormal cell 31A exhausts gas, gas exhaust path 37 in front of abnormal cell 31A widens, allowing the exhaust gas to be exhausted to the outside, and the chain reaction of thermal runaways to facing cell 31 can be suppressed.

Herein, the significance of fixing heat-resistant member 36 between holder end surfaces 32e facing each other is described. For example, a structure in which heat-resistant member 36 is movable between holder end surfaces 32e facing each other is also considered. Specifically, this structure can be achieved by making the width of heat-resistant member 36 smaller than the width of the left and right sides of holder 32, and not fixing heat-resistant member 36. Even with such a structure, when abnormal cell 31 generates gas, heat-resistant member 36 moves toward the facing holder end surface 32e in response to the pressure of gas, so that the influence of heat on facing cell 31 is suppressed, and gas exhaust path 37 can be widened. However, with a configuration in which heat-resistant member 36 is movable freely between holder end surfaces 32e, there is a problem that vibration or the like of battery pack 10 causes heat-resistant member 36 to move between holder end surfaces 32e, causing noise or wear. Therefore, in battery pack 10 of the present disclosure, the problem can be solved by providing a structure in which gas heat-resistant member 36 is fixed between holder end surfaces 32e, and is displaceable so as to widen gas exhaust path 37 in response to the pressure of gas of the abnormal cell 31.

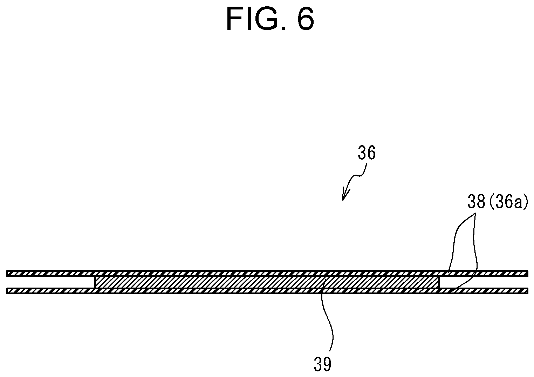

FIG. 6 is an example of the configuration of heat-resistant member 36 in battery pack 10 of the present disclosure. Heat-resistant member 36 in FIG. 6 includes hard plate 39 and two protective sheets 38 covering both surfaces of hard plate 39.

Hard plate 39 is a metal plate and is made of, for example, stainless steel (SUS). Hard plate 39 acts to block heat of high-temperature gas exhausted from abnormal cell 31 so that facing cell 31 is not affected by the heat.

Protective sheet 38 is formed of, for example, a sheet including an insulating material such as flame-retardant fibers or mica. Protective sheet 38 is formed to cover the entire part of hard plate 39. The end of protective sheet 38 extending more than the end of hard plate 39 is sandwiched and fixed between side surfaces 32f of holder 32. The peripheral part extending from the end of hard plate 39 of protective sheet 38 is provided with perforations or the like, and formed so as to break in response to a pressure of gas from abnormal cell 31, and acts as deformable part 36a.

In heat-resistant member 36 shown in FIG. 6, hard plate 39 blocks directly hitting of high-temperature gas to facing cell 31, and when deformable part 36a of protective sheet 38 breaks, hard plate 39 is displaced between holder end surfaces 32e facing each other and acts so as to widen gas exhaust path 37.

### <Second exemplary embodiment >

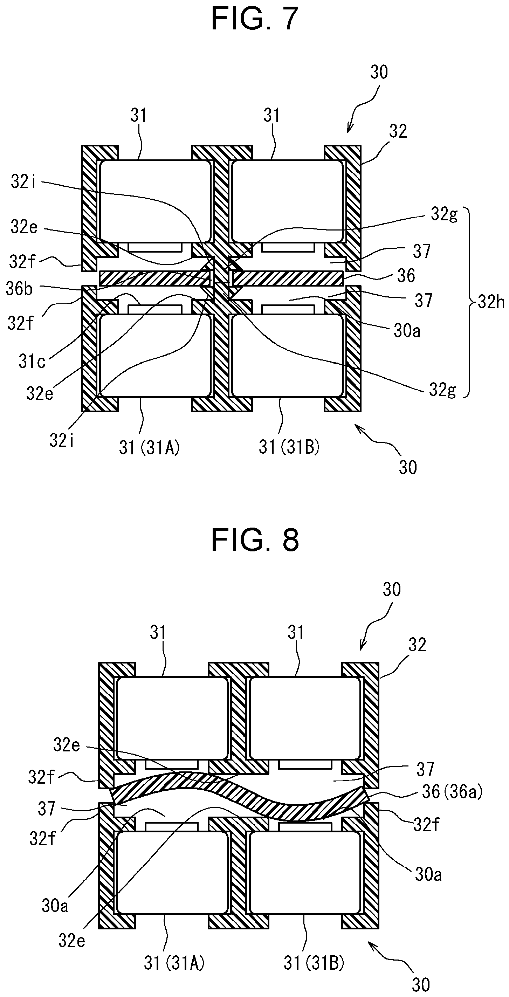

FIG. 7 shows a gas exhaust structure of battery pack 10 of a second exemplary embodiment. The same reference numerals are given to component elements similar to those in the first exemplary embodiment, and detailed description thereof will be omitted.

Battery block 30 of battery pack 10 of this exemplary embodiment includes protruding part 32g that protrudes perpendicularly from each holder end surface 32e. Protruding part 32g brings holder end surfaces 32e facing each other into contact with each other to form a circular columnar link part 32h. Link part 32h is, for example, a columnar site that links the centers of holder end surfaces 32e facing each other.

In FIG. 7, left and right side surfaces 32f of holder end surface 32e are opened. Battery blocks 30 facing each other may be configured to be linked only by link part 32h. Alternatively, the side surfaces of holder 32 in the depth direction and the forward direction in FIG. 7 may be linked.

Protruding part 32g includes claw parts 32i on the left and right sides. Claw part 32i is formed on the side surface of protruding part 32g so as to widen in the direction in which protruding part 32g protrudes from holder end surface 32e. Claw part 32i does not need to be formed on the entire periphery of protruding part 32g, and may be formed only on the left and right side surfaces of protruding part 32g in FIG. 5. Claw part 32i may be integrally formed with protruding part 32g, or may be attached using adhesives or the like.

Heat-resistant member 36 of this exemplary embodiment includes hole 36b in the center through which link part 32h can pass. Heat-resistant member 36 is formed so that when link part 32h is allowed to pass through hole 36b and holder end surfaces 32e facing each other are abutted, heat-resistant member 36 is fixed between upper and lower claw parts 32i.

Arrangement of battery block 30 and heat-resistant member 36 shown in FIG. 7 is in a normal state. Therefore, in this state, the distance between holder end surfaces 32e facing each other is made to be small and the distance between holder end surface 32e and heat-resistant member 36 is short, so that the size of gas exhaust path 37 is not sufficient for exhausting gas.

In this exemplary embodiment, a case where a lower left cell 31 (31A) undergoes thermal runaway is described. High-temperature and high-pressure gas is exhausted upward from gas exhaust valve 31c of abnormal cell 31A. Heat-resistant member 36 receives an upward force by the gas pressure. In response to this force, the site of heat-resistant member 36 that is brought into contact with claw part 32i around hole 36b pushes claw part 32i upward to be broken (separated) from protruding part 32g. When claw part 32i is separated from protruding part 32g, heat-resistant member 36 can be displaced upward, and gas exhaust path 37 in front of abnormal cell 31A and adjacent cell 31B is widened. Thus, gas exhausted from abnormal cell 31A is exhausted from the left and right openings of holder 32.

As described above, also in this exemplary embodiment, heat-resistant member 36 is displaced so as to widen gas exhaust path 37 in response to a pressure of gas exhausted from abnormal cell 31A, and a chain reaction of thermal runaways can be suppressed.

### <Third exemplary embodiment>

FIG. 8 shows a gas exhaust structure of battery pack 10 of a third exemplary embodiment that does not fall within the scope of the present invention. Left and right side surfaces 32f of holder end surface 32e of battery block 30 shown in FIG. 8 are open, but battery block 30 is linked by the side surfaces of holder 32 in the depth direction and the forward direction in FIG. 8.

Heat-resistant member 36 of this exemplary embodiment is made of a sheet-like elastic material. The length of heat-resistant member 36 in the left-right direction is formed to be longer than the length of holder end surface 32e in the left-right direction. Thus, when heat-resistant member 36 is housed between holder end surface s 32e facing each other, heat-resistant member 36 becomes S-shaped as shown in FIG. 8, end surfaces of heat-resistant member 36 support holder end surface 32e to be fixed.

The arrangement of battery block 30 and heat-resistant member 36 shown in FIG. 8 is in a normal state. Therefore, in this state, since the distance between holder end surfaces 32e facing each other is formed small, and a distance between holder end surface 32e and heat-resistant member 36 is short, the size of gas exhaust path 37 is not secured to be sufficient for exhausting gas. That is to say, heat-resistant member 36 is arranged so as to be in contact with gas exhaust valve 31c of cell 31B at the lower right side. The same is true to cell 31 at the upper left side.

When cell 31B becomes abnormal and exhausts high-temperature and high-pressure gas, heat-resistant member 36 that comes into contact with gas exhaust valve 31c of abnormal cell 31B is pushed upward. Furthermore, due to the gas pressure, heat-resistant member 36 is deformed along the shape of holder end surface 32e at the upper side, and gas exhaust path 37 above abnormal cell 31B and cell 31A at the left thereof is widened. Thereby, gas exhausted from cell 31B is exhausted to the outside from the opening in side surface 32f of holder 32.

The shape of heat-resistant member 36 in a normal state is not limited to an S-shape shown in FIG. 8. The shape may be a U-shape, a C-shape, or the like, as long as heat-resistant member 36 is bent and fixed in contact with holder end surface 32e. In order to secure gas exhaust path 37 under a pressure of the gas from abnormal cell 31, heat-resistant member 36 is preferably formed of a thin sheet shape that is easily deformable.

### <Fourth exemplary embodiment >

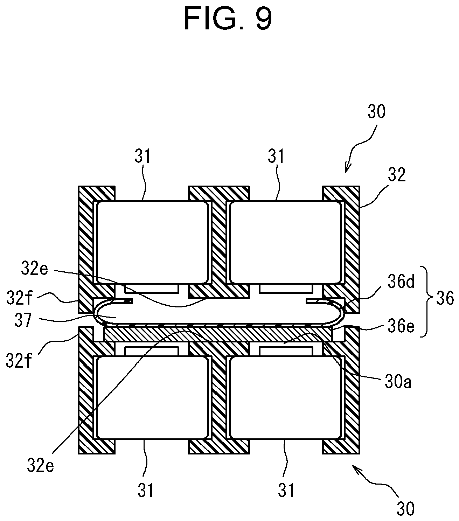

FIG. 9 shows a gas exhaust structure of battery pack 10 of a fourth exemplary embodiment that does not fall within the scope of the present invention. A structure of holder 32 is similar to that of battery pack 10 shown in FIG. 8.

Heat-resistant member 36 of this exemplary embodiment includes elastic part 36d formed of an elastic material and curved in a C-shape that opens upward, and plate-shaped part 36e pressed downward by the elastic power of elastic part 36d. Plate-shaped part 36e is formed of a metal plate or the like whose surface is insulated. Plate-like part 36e is formed in a size that closes opening part 32a of holder end surface 32e.

The arrangement of battery block 30 and heat-resistant member 36 shown in FIG. 9 is usually in a normal state. Therefore, for cell 31 at the lower side, plate-shaped part 36e closes holder end surface 32e, and gas exhaust path 37 is not substantially formed. On the other hand, for cell 31 at the upper side, gas exhaust path 37 can be secured. For example, the width of elastic part 36d in the depth direction is formed to be smaller than the width of holder end surface 32e in the depth direction. Thereby, elastic part 36d can be shaped to close only a part of side surface 32f of holder 32. When an abnormality occurs in upper cell 31 and gas is exhausted, the gas hits plate-shaped part 36e and is exhausted from the left and right openings.

When an abnormality occurs in lower cell 31, plate-shaped part 36e is pushed upward by a gas pressure. Since elastic part 36d is made of an elastic material, elastic part 36d is deformed so as to be crushed by the gas pressure, and plate-like part 36e is pushed up to holder end surfaces 32e facing each other. Thus, plate-shaped part 36e is displaced so that gas exhaust path 37 widens above lower cell 31. The gas discharged from abnormal cell 31 hits plate-shaped part 36e and is exhausted from the left and right openings. Note here that in this exemplary embodiment, a configuration in which elastic part 36d is made of an elastic material curved in a C-shape is shown as an example, but elastic part 36d is not limited to this example, and may be made of an elastic material whose cross section is bent in a wave shape as long as the shape is elastically deformable.

Note here that it should be noted that the present invention is not limited to the above-described exemplary embodiments and modifications thereof, and it goes without saying that various changes and improvements can be made within the scope of the claims of the present application.

### REFERENCE MARKS IN THE DRAWINGS

10 battery pack, 20 outer covering case, 30 battery block, 30a gas exhaust surface, 31 cell, 31a cell end surface, 31b cell side surface, 31c gas exhaust valve, 32 holder, 32a opening part, 32b housing part, 32c bottom surface part, 32d columnar part, 32e holder end surface, 32f side surface, 32g protruding part, 32h link part, 32i claw part, 33 side surface member, 34 heat insulating member, 36 heat-resistant member, 36a deformable part, 36b hole, 36c elastic part, 36d plate-shaped part, 37 gas exhaust path, 38 protective sheet, 39 hard plate, 40 external terminal

## Claims

1. A battery pack (10) comprising:
a plurality of battery blocks (30) each including a gas exhaust surface (30a), the gas exhaust surfaces (30a) of the plurality of battery blocks (30) facing each other; and
a heat-resistant member (36) arranged between the gas exhaust surfaces (30a) facing each other, and defining gas exhaust paths (37) between the heat-resistant member (36) and each of the gas exhaust surfaces (30a) facing each other;
wherein each of the plurality of battery blocks (30) includes:
a plurality of cells (31) each including a gas exhaust valve (31c), and
a holder (32) holding the plurality of cells (31) and aligning the gas exhaust valves (31c) of the plurality of cells (31) on a holder end surface (32e) of the holder (32) to define the gas exhaust surfaces (30a), and
the heat-resistant member (36) is
fixed between the holder end surfaces (32e) of the plurality of battery blocks (30), the holder end surfaces (32e) facing each other, and
displaceable to widen a corresponding one of the gas exhaust paths (37) in response to a pressure of gas exhausted from an abnormal cell (31) among the plurality of battery cells (31),
**characterized in that** the holder (32) includes a protruding part (32g) protruding from the holder end surface (32e), and one of claw parts (32i), the claw parts (32i) of the plurality of battery blocks (30) sandwiching and fixing the heat-resistant member (36) when the protruding parts (32g) facing each other of the holder end surfaces (32e) are brought into contact with each other, and **in that**
the heat-resistant member (36) includes a hole (36b) through which the protruding part (32g) is allowed to pass, and is displaceable by breaking the claw part (32i) in response to a pressure of gas exhausted from the abnormal cell (31).

2. The battery pack (10) according to claim 1, wherein
the heat-resistant member (36) is fixed with a plurality of sections sandwiched between side surfaces of the holder end surfaces (32e) facing each other, and
the heat-resistant member (36) includes the deformable part (36a) deformable in response to a pressure of gas exhausted by the abnormal cell (31).

3. The battery pack (10) according to claim 2, wherein
the heat-resistant member (36) includes a metal hard plate (39), and a protective sheet (38) covering both surfaces of the metal hard plate (39), and
the protective sheet (38) functions-as-the deformable part (36a).

4. The battery pack (10) according to claim 1, wherein
the heat-resistant member (36)
includes an elastic material and shows a curved shape that is brought into contact with and is fixed to the holder end surface (32e), and
is deformable in a part that is brought into contact with the holder end surface (32e) and is displaceable to widen the gas exhaust path (37) in response to a pressure of gas exhausted from the abnormal cell (31).

5. The battery pack (10) according to claim 1, wherein the heat-resistant member (36)
includes an elastic part including an elastic material, and a plate-shaped part that is pressed to the holder end surface (32e) by the elastic part, and,
is displaceable to widen the gas exhaust path (37) by displacing the plate-shaped part in response to a pressure of gas exhausted by the abnormal cell (31) that faces the plate-shaped part.

## Patentansprüche

1. Batteriepack (10), umfassend:
eine Vielzahl von Batterieblöcken (30), die jeweils eine Gasauslassoberfläche (30a) umfassen, wobei die Gasauslassoberflächen (30a) der Vielzahl von Batterieblöcken (30) einander zugewandt sind; und
ein hitzebeständiges Element (36), das zwischen den Gasauslassoberflächen (30a), die einander zugewandt sind, angeordnet ist und Gasauslasswege (37) zwischen dem hitzebeständigen Element (36) und jeder der Gasauslassoberflächen (30a), die einander zugewandt sind, definiert;
wobei jeder der Vielzahl von Batterieblöcken (30) umfasst:
eine Vielzahl von Zellen (31), die jeweils ein Gasauslassventil (31c) umfassen, und
einen Halter (32), der die Vielzahl von Zellen (31) hält und die Gasauslassventile (31c) der Vielzahl von Zellen (31) auf einer Halterendoberfläche (32e) des Halters (32) ausrichtet, um die Gasauslassoberflächen (30a) zu definieren, und
das hitzebeständige Element (36)
zwischen den Halterendoberflächen (32e) der Vielzahl von Batterieblöcken (30) befestigt ist, wobei die Halterendoberflächen (32e) einander zugewandt sind, und
verlagerbar ist, um einen entsprechenden der Gasauslasswege (37) als Reaktion auf einen Druck von Gas aufzuweiten, das von einer abnormalen Zelle (31) von der Vielzahl von Batteriezellen (31) ausgelassen wird,
**dadurch gekennzeichnet, dass** der Halter (32) einen hervorstehenden Teil (32g), der von der Halterendoberfläche (32e) hervorsteht, und einen von Klauenteilen (32i) umfasst, wobei die Klauenteile (32i) der Vielzahl von Batterieblöcken (30) das hitzebeständige Element (36) umschließen und befestigen, wenn die einander zugewandten hervorstehenden Teile (32g) der Halterendoberflächen (32e) miteinander in Kontakt gebracht werden, und dadurch, dass
das hitzebeständige Element (36) ein Loch (36b) umfasst, das dem hervorstehenden Teil (32g) erlaubt wird, zu durchqueren und das durch Bruch des Klauenteils (32i) als Reaktion auf einen Druck von Gas verlagerbar ist, das von der abnormalen Zelle (31) ausgelassen wird.

2. Batteriepack (10) nach Anspruch 1, wobei
das hitzebeständige Element (36) mit einer Vielzahl von Abschnitten befestigt ist, die zwischen Seitenoberflächen der Halterendoberflächen (32e), die einander zugewandt sind, umschlossen sind, und
das hitzebeständige Element (36) den verformbaren Teil (36e) umfasst, der als Reaktion auf einen Druck von Gas verformbar ist, das von der abnormalen Zelle (31) abgelassen wird.

3. Batteriepack (10) nach Anspruch 2, wobei
das hitzebeständige Element (36) eine harte Metallplatte (39) und eine Schutzlage (38) umfasst, die beide Oberflächen der harten Metallplatte (39) bedeckt, und
die Schutzlage (38) als der verformbare Teil (36a) wirkt.

4. Batteriepack (10) nach Anspruch 1, wobei das hitzebeständige Element (36)
ein elastisches Material umfasst und eine gekrümmte Form aufweist, die mit der Halterendoberfläche (32e) in Kontakt gebracht wird und daran befestigt wird, und
in einem Teil verformbar ist, der mit der Halterendoberfläche (32e) in Kontakt gebracht wird, und verlagerbar ist, um den Gasauslassweg (37) als Reaktion auf einen Druck von Gas, das von der abnormalen Zelle (31) ausgelassen wird, aufzuweiten.

5. Batteriepack (10) nach Anspruch 1, wobei das hitzebeständige Element (36)
einen elastischen Teil, der ein elastisches Material umfasst, und einen plattenförmigen Teil umfasst, der durch den elastischen Teil zur Halterendoberfläche (32e) gedrückt wird, und
verlagerbar ist, um den Gasauslassweg (37) durch Verlagern des plattenförmigen Teils als Reaktion auf einen Druck von Gas aufzuweiten, das von der abnormalen Zelle (31) ausgelassen wird, die dem plattenförmigen Teil zugewandt ist.

## Revendications

1. Bloc-batterie (10) comprenant :
une pluralité de blocs de batterie (30) comprenant chacun une surface d'échappement de gaz (30a), les surfaces d'échappement de gaz (30a) de la pluralité de blocs de batterie (30) se faisant face ; et
un élément résistant à la chaleur (36) agencé entre les surfaces d'échappement de gaz (30a) se faisant face, et définissant des trajectoires d'échappement de gaz (37) entre l'élément résistant à la chaleur (36) et chacune des surfaces d'échappement de gaz (30a) se faisant face ;
dans lequel chacun de la pluralité de blocs de batterie (30) comprend :
une pluralité d'éléments (31) comprenant chacun une soupape d'échappement de gaz (31c), et
un support (32) maintenant la pluralité d'éléments (31) et alignant les soupapes d'échappement de gaz (31c) de la pluralité d'éléments (31) sur une surface d'extrémité de support (32e) du support (32) afin de définir les surfaces d'échappement de gaz (30a), et
l'élément résistant à la chaleur (36) est :
fixé entre les surfaces d'extrémité de support (32e) de la pluralité de blocs de batterie (30), les surfaces d'extrémité de support (32e) se faisant face, et
déplaçable pour élargir une trajectoire correspondante des trajectoires d'échappement de gaz (37) en réponse à une pression de gaz évacué d'un élément anormal (31) parmi la pluralité d'éléments de batterie (31),
**caractérisé en ce que** le support (32) comprend une partie en saillie (32g) faisant saillie de la surface d'extrémité de support (32e), et une des parties de griffe (32i), les parties de griffe (32i) de la pluralité de blocs de batterie (30) prenant en sandwich et fixant l'élément résistant à la chaleur (36) lorsque les parties en saillie (32g) se faisant face des surfaces d'extrémité de support (32e) sont amenées en contact entre elles, et **en ce que** :
l'élément résistant à la chaleur (36) comprend un trou (36b) à travers lequel la partie en saillie (32g) est autorisée à passer, et est déplaçable en cassant la partie de griffe (32i) en réponse à une pression de gaz évacué de l'élément anormal (31).

2. Bloc-batterie (10) selon la revendication 1, dans lequel :
l'élément résistant à la chaleur (36) est fixé avec une pluralité de sections prises en sandwich entre des surfaces latérales des surfaces d'extrémité de support (32e) se faisant face, et
l'élément résistant à la chaleur (36) comprend la partie déformable (36a) déformable en réponse à une pression du gaz évacué par l'élément anormal (31).

3. Bloc-batterie (10) selon la revendication 2, dans lequel :
l'élément résistant à la chaleur (36) comprend une plaque dure en métal (39), et une feuille de protection (38) recouvrant les deux surfaces de la plaque dure en métal (39), et
la feuille de protection (38) sert de partie déformable (36a).

4. Bloc-batterie (10) selon la revendication 1, dans lequel :
l'élément résistant à la chaleur (36) :
comprend un matériau élastique et représente une forme courbée qui est amenée en contact avec et est fixée à la surface d'extrémité de support (32e), et
est déformable dans une partie qui est amenée en contact avec la surface d'extrémité de support (32e) et est déplaçable pour élargir la trajectoire d'échappement de gaz (37) en réponse à une pression de gaz évacué de l'élément anormal (31).

5. Bloc-batterie (10) selon la revendication 1, dans lequel :
l'élément résistant à la chaleur (36) :
comprend une partie élastique comprenant un matériau élastique, et une partie en forme de plaque qui est comprimée sur la surface d'extrémité de support (32e) par la partie élastique, et
est déplaçable pour élargir la trajectoire d'échappement de gaz (37) en déplaçant la partie en forme de plaque en réponse à une pression du gaz évacué par l'élément anormal (31) qui fait face à la partie en forme de plaque.
